# EUROPÄISCHE PATENTSCHRIFT

(11) **EP 1 405 000 B1**
(45) Veröffentlichungstag und Bekanntmachung des Hinweises auf die Patenterteilung: **26.03.2008**
(21) Anmeldenummer: 02754289.3
(22) Anmeldetag: 01.07.2002
(51) Int. Cl.: F16L 13/14

(54) **Presshülse zur Verwendung in einer Rohrpresskupplung sowie Rohrpresskupplung und Verpressungsverfahren**
Press sleeve for pipe press coupling, pipe press coupling and a pressing method
Manchon de compression pour raccord de compression de tuyaux, raccord de compression de tuyaux muni d'un tel manchon et procédé de compression

(30) Priorität: 07.07.2001 DE 10133183
(43) Veröffentlichungstag der Anmeldung: 07.04.2004
(73) Patentinhaber: Reckzeh, Manfred, 63457 Hanau (DE); Reckzeh, Thomas, 63457 Hanau (DE)
(72) Erfinder: Reckzeh, Manfred, 63457 Hanau (DE); Reckzeh, Thomas, 63457 Hanau (DE)
(74) Vertreter: Bonsmann, Joachim Bernhard
(86) Internationale Anmeldenummer: PCT/DE2002/002372
(87) Internationale Veröffentlichungsnummer: WO 2003/004917

(56) Entgegenhaltungen:
- EP-A- 0 159 997
- DE-U- 29 823 932
- US-A- 5 470 113

## Beschreibung

Die Erfindung betrifft eine Rohrpresskupplung gemäß dem Oberbegriff des Patentanspruchs 1, eine Presshülse gemäß Anspruch 8 sowie ein Verpressungsverfahren gemäß dem Oberbegriff des Anspruchs 9.

Gattungsgemäße Rohrpresskupplungen sind beispielsweise aus der EP 01 59 997 bekannt. Diese dienen dazu, zuverlässige und langzeitstabile Verbindungen bei Rohren aus Kunststoffen sowie relativ weichen Metallen sowie Mehrschicht-Verbundwerkstoffen herzustellen. Die bekannten Rohrpresskupplungen können als Alternative zum Schweißen beispielsweise für die Verbindung von Hydraulikleitungen, Wasser- oder Gaserdleitungen eingesetzt werden.

Das Prinzip der Verpressung besteht darin, dass das zu verpressende Rohrende auf eine in der Regel profiliert ausgebildete Stützhülse aufgeschoben wird, die Teil eines Fittings ist. Der Durchmesser der Stützhülse bzw. der Profilierungen ist derart gewählt, dass - bei Beachtung der möglichen Toleranzen im Rohrdurchmesser - das Rohr ohne großen Kraftaufwand auf die Stützhülse gesteckt werden kann. Über das Rohrende wird bei der bekannten Verpressung eine Quetschhülse aufgeschoben. Über diese Quetschhülse wird schließlich axial eine Überwurf-Presshülse (nachfolgend der Kürze halber als "Presshülse" bezeichnet) aufgeschoben. Diese Presshülse weist ein derartiges Innenprofil auf, dass die Quetschhülse und das darunterliegende Rohr derart verformt werden, dass das Rohrmaterial in die Profilierungen der Stützhülse gedrückt wird, um so eine langzeitstabile und -dichte Verpressung zu erhalten. Zum Aufschieben der Presshülse sind insbesondere bei größeren Rohren oder bei Metallrohren hohe axiale Kräfte erforderlich, die in der Regel mittels eines speziellen hydraulischen Presswerkzeugs aufgebracht werden. Die Presshülse zeichnet sich bei den bekannten Rohrpresskupplungen durch ein im Wesentlichen zylindrisches Innenprofil aus.

Aus der DE 298 23 932 U ist eine Rohrpresskupplung bekannt, bei der eine Überwurf-Presshülse innenseitig gestuft ausgebildet ist.

Aus der US 5 470 113 A ist eine Rohrpresskupplung bekannt, bei der eine Überwurf-Presshülse ebenfalls innenseitig gestuft ausgebildet ist.

Bei den bekannten Rohrpresskupplungen ist nachteilig, dass die für die Verpressung aufzubringenden Kräfte relativ hoch sind, so dass auch bei Verwendung hydraulischer Verpresswerkzeuge der Einsatzbereich der bekannten Verpressungen - abhängig vom Rohrdurchmesser, der Rohrwandstärke und der Härte des Rohrmaterials - begrenzt ist. Die hohen Verpressungskräfte hängen damit zusammen, dass das Rohrmaterial in das Profil der Stützhülse verdrängt wird. Insbesondere bei dickwandigen Rohren sind hierzu hohe Kräfte erforderlich. Um Toleranzen hinsichtlich der Rohrdicke (insbesondere hinsichtlich des Rohrinnendurchmessers) auszugleichen und einerseits trotz der Toleranzen zu gewährleisten, dass das Rohrende mit vertretbarem Kraftaufwand auf die Stützhülse aufgeschoben werden kann sowie andererseits ein ausreichendes Eindrücken des Rohrmaterials in die Profilierung der Stützhülse und somit eine zuverlässige Abdichtung zu gewährleisten, müssen die Umformungen des Rohrmaterials ein bestimmtes Ausmaß ausweisen. Aus diesen Gründen ist das bekannte Verpressungssystem trotz seiner Zuverlässigkeit bei größeren Rohrleitungen bislang nicht einsetzbar, da die erforderlichen Presskräfte an die Grenzen der Materialbelastbarkeit reichen und die erforderlichen Verpresswerkzeuge zu aufwendig werden.

Der Erfindung liegt die Aufgabe zugrunde, die bei den bekannten Rohrpresskupplungen aufzubringenden axialen Verpressungskräfte zu reduzieren. Damit sollen auch Rohre mit größerem Durchmesser bzw. aus härteren, d.h. schwerer umformbaren Materialien einer Verpressung zugänglich werden. Weiterhin führt eine Reduktion der aufzubringenden Verpresskräfte dazu, dass die Verpresswerkzeuge kompakter und preiswerter ausgebildet sein können sowie leichter handhabbar sind.

Die Lösung der vorstehend genannten Aufgabe erfolgt mit einer Rohrpresskupplung gemäß Patentanspruch 1 bzw. einer Presshülse gemäß Patentanspruch 8 bzw. mit einem Verpressverfahren gemäß Patentanspruch 9.

Zweckmäßige Ausgestaltungen der Erfindung ergeben sich aus den Unteransprüchen.

Im Rahmen der erfindungsgemäßen Lehre kann grundsätzlich eine Quetschhülse ohne Profilierung eingesetzt werden, jedoch ist bevorzugt eine profilierte Quetschhülse vorgesehen, wovon in der nachfolgenden Beschreibung jeweils ausgegangen wird.

Die erfindungsgemäße Rohrpresskupplung bzw. Presshülse zeichnet sich gemäß Patentanspruch 1 dadurch aus, dass die Presshülse wenigstens einen radial umlaufenden Presswulst bzw. einen Bereich mit verjüngtem Querschnitt aufweist. Durch diesen wenigstens einen Presswulst bzw. wenigstens einen Bereich mit verjüngtem Querschnitt wird erreicht, dass beim Aufschieben der Presshülse die eigentliche Umformarbeit der Quetschhülse bzw. des Rohrendes nur durch die Kante des Presswulstes bzw. der Presswülste bzw. den Bereich oder die Bereiche mit verjüngtem Querschnitt erfolgt. Die übrigen Innenbereiche der Presshülse springen gegenüber dem Presswulst bzw. der verjüngten Bereiche etwas zurück. Dadurch werden die Reibungskräfte beim axialen Übereinandergleiten von Quetschhülse und Presshülse, die - wie im Rahmen der vorliegenden Erfindung erkannt wurde - einen großen Teil der für die Verpressung erforderlichen Kräfte ausmachen - deutlich reduziert. Die Qualität der Verpressung wird hierdurch verbessert, da das Material des Quetschringes bzw. des Rohrendes im Wesentlichen inelastisch verformt wird und daher seine Form beibehält, nachdem der Wulst bzw. die Verjüngung den entsprechenden axialen Verpressungsbereich passiert hat. Bei den bekannten Rohrpresskupplungen, die eine Presshülse mit einem im Wesentlichen zylindrischen Innenprofil aufweisen, drücken die gesamten Umfangsflächen der Quetschhülse mit zum Teil erheblichen Rückstellkräften auf die gesamten im Bereich der Stützhülse befindlichen Innenflächen der Quetschhülse, was sowohl bei großen als auch bei kleinen Rohrdurchmessern zu erheblichen Reibungskräften führt. Die Reibungskräfte bei den bekannten Rohrpresskupplungen steigen größenordnungsmäßig mit dem Rohrdurchmesser bzw. der Rohrwanddicke überproportional stark an, was im Rahmen der Erfindung weitgehend vermieden wird. Mit der erfindungsgemäßen Presshülse können die erforderlichen maximalen Presskräfte um größenordnungsmäßig beispielsweise 30 bis 50 % reduziert werden, ohne dass dabei die Qualität der Verpressung verschlechtert wird.

In einer bevorzugten Ausführungsform der Erfindung weist der wenigstens eine Presswulst eine im Wesentlichen runde Querschittsgestalt auf, d.h., der an die Innenseite der Presshülse angeformte Presswulst weist im Querschnitt die Gestalt eines Kreisabschnittes auf. Besonders bevorzugt weist die Presshülse eine im Wesentlichen hohlzylinderförmige oder eine leicht konisch nach hinten sich erweiternde Grundform auf, wobei unmittelbar an der Stirnseite, die über den Stützhülsenbereich geschoben wird, ein erster abgerundeter Presswulst mit einem ersten Minimaldurchmesser und axial in Aufschiebrichtung dahinter liegend ein zweiter abgerundeter Presswulst mit einem zweiten Minimaldurchmesser vorgesehen ist, der kleiner als der erste Minimaldurchmesser ist. Durch die zwei verschiedenen Presswülste mit unterschiedlichen Minimaldurchmessern kann die Verpressung in zwei Phasen erfolgen, wodurch die für die Verformung erforderlichen axialen Kräfte gegenüber einer einphasigen Verpressung reduziert werden.

Durch die abgerundete Form der Presswülste ergibt sich eine geringe kraftschlüssige Auflagefläche der Presshülse auf der Quetschhülse, wodurch wiederum die Reibung reduziert wird. Durch die abgerundete Form werden weiterhin die Gleiteigenschaften verbessert und es wird eine Beschädigung der Quetschhülse vermieden.

Alternativ können die Wülste bzw. Querschnittsverjüngungen jedoch im Rahmen der Erfindung auch z.B. im Wesentlichen dreiecksförmig oder rechteckig oder in Form mehrerer Rippen oder in jeder beliebigen anderen Form ausgebildet sein, sofern gewährleistet ist, dass die Presskräfte zur Reduzierung der Reibung im Wesentlichen in dem in Verpressrichtung "vorderen" Bereich der Presshülse aufgebracht werden.

Besonders bevorzugt weist die Presshülse in ihrem dem Presswulst gegenüberliegenden Stirnendbereich einen Bereich mit einer - bevorzugt im Wesentlichen konischen - Querschnittsverjüngung auf. Dieser konische Bereich bewirkt, dass der Ringspalt zwischen Rohrende und Stützhülse auf dem letzten Stück des Verpressungsweges zusätzlich komprimiert wird. Damit wird verhindert, dass ein in dem Rohr transportiertes Medium über den Ringspalt in den Bereich zwischen Stützhülse und Rohr eindringt und dort evtl. Korrosionseffekte bewirkt.

Die Quetschhülse kann bevorzugt außenseitig eine Profilierung aufweisen, die mit der Profilierung der Stützhülse korrespondiert, d.h., dass die Quetschhülse einen größeren Durchmesser in den Bereichen besitzt, in denen das Stützhülsenprofil jeweils eine Ausnehmung aufweist. Dadurch wird das Rohrmaterial besonders in die Ausnehmungen der Stützhülse gezwungen. Die Profilierung ist bevorzugt ebenfalls abgerundet ausgebildet, um die Gleiteigenschaften zu verbessern.

Bevorzugt ist die Oberfläche der Presshülse härter ausgebildet als das Material der Quetschhülse.

Die Erfindung wird nachfolgend anhand der Zeichnungen beispielhaft näher erläutert. Es zeigen:
- Fig. 1: eine schematische Querschnittsdarstellung einer erfindungsgemäßen Rohrpresskupplung im nicht verpressten Zustand;
- Fig. 2: eine alternative Ausführungsform der Rohrpresskupplung gemäß Figur 1;
- Fig. 3: eine vergrößerte Darstellung des Querschnitts der erfindungsgemäßen Presshülse; und
- Fig. 4: die erfindungsgemäße Presshülse gemäß Figur 1 im verpressten Zustand.

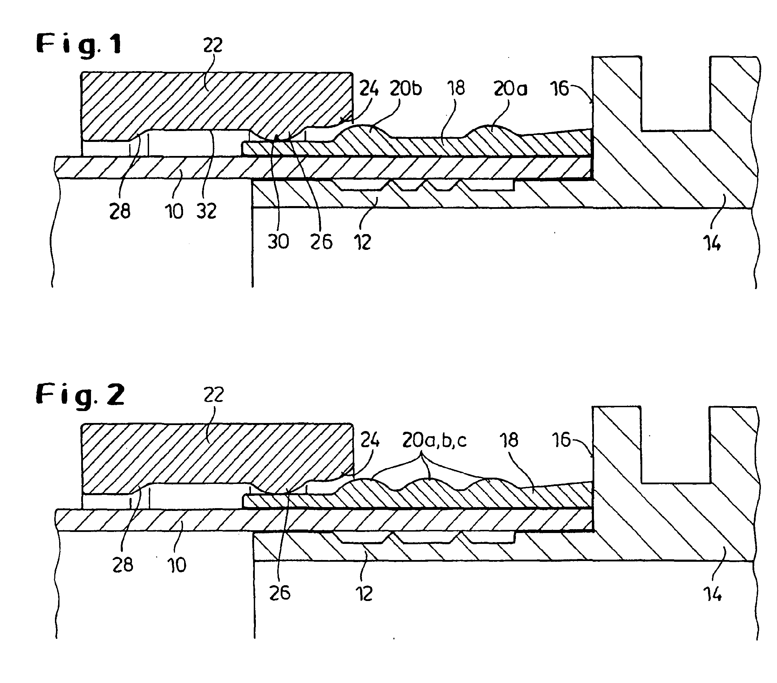

In Figur 1 ist der Querschnitt einer erfindungsgemäßen Rohrpresskupplung (nicht maßstäblich) dargestellt, wobei die Kupplung insgesamt rotationssymmetrisch ausgebildet ist (unterer spiegelbildlicher Teil nicht dargestellt). Die für die einzelnen Elemente verwendeten Materialien können Kunststoffe (insbesondere modifizierte Kunststoffe) oder Metalle (z.B. Stahl, Kupfer, Messing, Gußmaterialien) sein. Die Rohrpresskupplung weist ein Rohrende 10 auf, das auf eine profilierte Stützhülse 12 aufgeschoben ist. Die Stützhülse 12 ist Teil eines - nicht vollständig dargestellten - Fittings 14 (z.B. einer Kupplung, eines T-Stücks usw.). Das Rohrende 10 stößt gegen einen integral mit dem Fitting gebildeten Anschlag 16. Vor dem Aufstecken des Rohrendes 10 auf die Stützhülse 12 wurde eine Quetschhülse 18 über das Rohrende gegen den Anschlag 16 geschoben, die einen im Wesentlichen zylinderförmigen Innendurchmesser und einen Außendurchmesser mit zwei runden Profilierungen 20a, 20b aufweist.

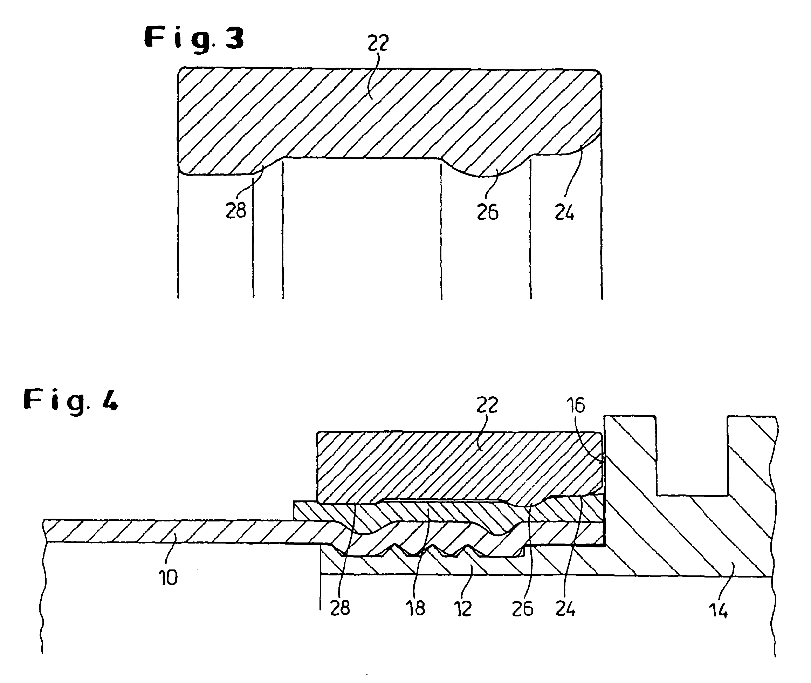

Über die Quetschhülse 18 wird - in der Regel mittels eines speziellen hydraulischen Werkzeugs - eine Presshülse 22 axial auf die Quetschhülse 18 aufgeschoben. Das axiale Innenprofil der Presshülse 22 ist derart ausgebildet, dass die Quetschhülse 18 und damit das darunterliegende Rohrende 10 umgeformt werden, wodurch das Material des Rohrendes 10 in die Profilierung der Stützhülse eingreift (vgl. den Verpressungszustand gemäß Fig. 4) und eine ausgesprochen feste axiale Fixierung und langzeitstabile Abdichtung erreicht wird.

Im Rahmen der Erfindung weist die Presshülse (vgl. vergrößerte Darstellung in Fig. 3) zwei radial umlaufende Presswülste 24 und 26 auf. Der erste Presswulst 24 ist direkt an der dem Fitting zugewandten Stirnseite der Presshülse vorgesehen. In Verpressrichtung hinter (d.h. in der Zeichnung links) von dem ersten Presswulst 24 befindet sich ein zweiter Presswulst 26, durch den die Presshülse stärker verengt wird als durch den ersten Presswulst 24. Der erste Presswulst kann in dem axialen Bereich vor dem zweiten Presswulst etwas zurückspringen, wie aus Fig. 1 ersichtlich, oder auch im Übergangsbereich in eine näherungsweise zylindrische Fläche übergehen. Wichtig ist, dass die Presshülse hinter dem zweiten Presswulst 26 etwas zurückspringt, so dass die Press- und damit die Reibungskräfte in diesem Bereich 32 durch eine entsprechende "Entspannung" reduziert werden.

Beim Aufschieben der Presshülse 22 wird die Quetschhülse 18 und das darunter befindliche Rohrende 10 komprimiert. Die höher hervorstehenden Profilierungen 20a, 20b werden im Ausführungsbeispiel nacheinander durch beide Wülste 24, 26 in zwei Phasen komprimiert, während die übrigen Bereiche im Wesentlichen von der Phase 26 komprimiert werden. Dabei bewirkt die abgerundete Form der Profilierungen sowie der Wülste gute Gleiteigenschaften. Weiterhin ist hierdurch die eigentliche Kontaktfläche 30 relativ klein, wodurch die Reibung ebenfalls reduziert wird. Insgesamt wird auf diese Weise das Rohr derart umgeformt, dass es in der Profilierung der Stützhülse 12 gehalten wird. Da die Umformung zu einem Teil inelastisch ist, sind die Rückstellkräfte, die auf den mittleren Bereich 32 der Presshülse wirken, erheblich geringer als in den Bereichen der Presswülste. Dadurch bleiben die zu überwindenden Reibungskräfte über den Verpressweg relativ konstant, was im Gegensatz zum Stand der Technik steht, bei dem die Kräfte durch die zunehmend größeren, gegeneinander liegenden Flächen über den Verpressweg deutlich ansteigen.

Weiterhin erfüllen die Wülste 24, 26 zusätzlich eine Sicherungsfunktion für die Presshülse, da diese sich in der Endstellung (Fig. 4) in eine Art Kuhle einarbeiten, wodurch eine Rückwärtsbewegung der Presshülse verhindert wird und die Presshülse somit selbstsichernd ist.

In dem dem Rohrende zugewandten (in der Darstellung linken) Stirnendbereich ist innenseitig zusätzlich ein sich konisch verjüngender Bereich 28 vorgesehen (in Fig. 1 ist das Maß der Verjüngung zur Illustration im Gegensatz zu Fig. 3 verstärkt dargestellt). Damit wird erreicht, dass das Rohrende 10 in dem Übergangsbereich zur Stützhülse 12 besonders stark formschlüssig angepresst wird, so dass ein Eindringen des in dem Rohr 10 transportierten Mediums in den Ringspalt zwischen Rohrende und Stützhülse zuverlässig und die damit einhergehende Spaltkorrosion verhindert wird. Zum Stirnende hin ist die Quetschhülse über einen kurzen Abschnitt wiederum zylindrisch ausgebildet.

In Fig. 2 ist eine alternative Ausführungsform der erfindungsgemäßen Rohrpresskupplung dargestellt, bei der gleiche Teile mit gleichen Bezugszeichen versehen sind. Der Unterschied gegenüber Fig. 1 besteht im Wesentlichen in einer abweichenden Profilierung der Stützhülse 12 und der Quetschhülse, die drei Profilierungen 20a, 20b und 20c aufweist.

Wie aus den Figuren ersichtlich, steht die Quetschhülse 18 im verpressten Zustand etwas über die Presshülse 22 vor. Dadurch wird eine zusätzliche Abstützung des Rohrendes 10 erreicht.

Die erfindungsgemäße Verpressung eignet sich neben Kunststoffrohren auch für Metallrohre z.B. aus Stahl, Edelstahl oder Kupfer.

## Patentansprüche

1. Rohrpresskupplung, bei der im verpressten Zustand wenigstens ein Endbereich (10) eines Rohres mittels einer außen auf das Rohr axial aufgeschobenen, radiale Presskräfte ausübenden Presshülse (22) sowie einer Quetschhülse (18) mit einer in das Rohrende eingesetzten Stützhülse (12) verbunden ist, wobei zur Herstellung der Verpressung das Rohrende (10) auf die Stützhülse (12) geschoben, darüber die Quetschhülse angeordnet und die Presshülse (22) axial über die Quetschhülse im Stützhülsenbereich aufgeschoben wird, **dadurch gekennzeichnet, dass** die Presshülse (22) innenseitig in dem Bereich, der beim Aufschieben der Presshülse als erstes über den Bereich der Stützhülse geschoben wird, wenigstens einen radial umlaufenden Presswulst bzw. wenigstens einen Bereich mit verjüngtem Querschnitt (24; 26) aufweist, der derart ausgebildet ist, dass durch diesen höhere Presskräfte aufgebracht werden als von wenigstens einem axial in Aufschiebrichtung hinter dem Presswulst bzw. dem Bereich mit verjüngtem Querschnitt liegenden axialen Innenabschnitt (32) der Presshülse (22).

2. Rohrpresskupplung nach Anspruch 2, **dadurch gekennzeichnet, dass** die Quetschhülse (18) profiliert ausgebildet ist.

3. Rohrpresskupplung nach Anspruch 1 oder 2, **dadurch gekennzeichnet, dass** der wenigstens eine Presswulst bzw. der Bereich mit verjüngtem Querschnitt (24; 26) eine im Wesentlichen runde Querschittsgestalt aufweist.

4. Rohrpresskupplung nach einem der Ansprüche 1 bis 3, **dadurch gekennzeichnet, dass** die Presshülse (22) eine im Wesentlichen hohlzylinderförmige oder leicht konische Grundform aufweist, wobei unmittelbar an der Stirnseite, die über den Stützhülsenbereich geschoben wird, ein erster abgerundeter Presswulst (24) mit einem ersten Minimaldurchmesser und axial in Aufschiebrichtung dahinter liegend ein zweiter abgerundeter Presswulst (26) mit einem zweiten Minimaldurchmesser vorgesehen ist, der kleiner als der erste Minimaldurchmesser ist.

5. Rohrpresskupplung nach einem der Ansprüche 1 bis 4, **dadurch gekennzeichnet, dass** die Presshülse (22) in ihrem dem Rohrende (10) zugewandten Stirnendbereich einen Bereich (28) mit einer im Wesentlichen konischen Querschnittsverjüngung aufweist.

6. Rohrpresskupplung nach Anspruch 5, **dadurch gekennzeichnet, dass** die Quetschhülse (18) eine außenseitige Profilierung (20a,; 20b) aufweist, die mit einer entsprechenden Profilierung der Stützhülse (12) korrespondiert.

7. Rohrpresskupplung nach Anspruch 6, **dadurch gekennzeichnet, dass** die außenseitige Profilierung (20a; 20b) der Quetschhülse abgerundet ausgebildet ist.

8. Presshülse (22) zur Verwendung in einer Rohrpresskupplung nach einem der vorhergehenden Ansprüche, **dadurch gekennzeichnet, dass** die Presshülse (22) innenseitig in dem Bereich, der beim Aufschieben der Presshülse als erstes über den Bereich der Stützhülse (12) der Rohrpresskupplung geschoben wird, wenigstens einen radial umlaufenden Presswulst bzw. wenigstens einen Bereich mit verjüngtem Querschnitt (24; 26) aufweist, der derart ausgebildet ist, dass durch diesen höhere Presskräfte aufgebracht werden als von wenigstens einem axial in Aufschiebrichtung hinter dem Presswulst bzw. dem Bereich mit verjüngtem Querschnitt liegenden axialen Innenabschnitt (32) der Presshülse (22).

9. Verfahren zur Herstellung einer Verpressung eines Rohrendes (10) mit einer Rohrpresskupplung nach einem der vorhergehenden Ansprüche 1 bis 7, **dadurch gekennzeichnet, dass** die radialen Presskräfte durch die Presshülse (22) verstärkt von einem Innenbereich (24; 26) der Presshülse aufgebracht werden, der nahe dem dem Fitting (14) zugewandten Stirnende der Presshülse (22) liegt.

10. Verfahren nach Anspruch 9, **dadurch gekennzeichnet, dass** die Presskräfte zusätzlich von einem Innenbereich (28) der Presshülse (22) aufgebracht werden, der nahe dem dem Rohr zugewandten Stirnende der Presshülse (22) liegt.

## Claims

1. A compression pipe joint in which in the pressed condition at least one end region (10) of a pipe is connected by means of a compression sleeve (22) which is pushed axially on to the pipe on the outside thereof and which exerts radial compression forces and a crimp sleeve (18) to a support sleeve (12) fitted into the pipe end, wherein to produce the pressing action the pipe end (10) is pushed on to the support sleeve (12), the crimp sleeve is arranged thereover and the compression sleeve (22) is pushed axially over the crimp sleeve in the support sleeve region, **characterised in that** on the inside in the region which when the compression sleeve is pushed on is first pushed over the region of the support sleeve the compression sleeve (22) has at least one radially extending compression bead or at least one region of narrowed cross-section (24; 26) which is of such a configuration that higher compression forces are applied thereby than by at least one axial internal portion (32) of the compression sleeve (22), which internal portion is disposed axially in the direction in which the compression sleeve is pushed on behind the compression bead or the region of narrowed cross-section.

2. A compression pipe joint according to claim 1 **characterised in that** the crimp sleeve (18) is of a profiled configuration.

3. A compression pipe joint according to claim 1 or claim 2 **characterised in that** the at least one compression bead or the region of narrowed cross-section (24; 26) is of a substantially round cross-sectional configuration.

4. A compression pipe joint according to one of claims 1 to 3, **characterised in that** the compression sleeve (22) is of a substantially hollow-cylindrical or slightly conical basic shape, wherein provided directly at the end which is pushed over the support sleeve region is a first rounded compression bead (24) of a first minimum diameter and disposed therebehind axially in the direction in which the compression sleeve is pushed on a second rounded compression bead (26) of a second minimum diameter smaller than the first minimum diameter.

5. A compression pipe joint according to one of claims 1 to 4 **characterised in that** in its end region towards the pipe end (10) the compression sleeve (22) has a region (28) of a substantially conical cross-sectional taper.

6. A compression pipe joint according to claim 5 **characterised in that** the crimp sleeve (18) has an external profiling (20a; 20b) corresponding to a corresponding profiling on the support sleeve (12).

7. A compression pipe joint according to claim 6 **characterised in that** the external profiling (20a; 20b) of the crimp sleeve is of a rounded configuration.

8. A compression sleeve (22) for use in a compression pipe joint according to one of the preceding claims **characterised in that** on the inside in the region which when the compression sleeve is pushed on is first pushed over the region of the support sleeve (12) the compression sleeve (22) of the compression pipe joint has at least one radially extending compression bead or at least one region of narrowed cross-section (24; 26) which is of such a configuration that higher compression forces are applied thereby than by at least one axial internal portion (32) of the compression sleeve (22), which internal portion is disposed axially in the direction in which the compression sleeve is pushed on behind the compression bead or the region of narrowed cross-section.

9. A method of making a compression joint of a pipe end (10) with a compression pipe joint according to one of preceding claims 1 to 7 **characterised in that** the radial compression forces are applied by the compression sleeve (22) in an increased fashion by an internal region (24; 26) of the compression sleeve, which is near the end of the compression sleeve (22), that is towards the fitting (14).

10. A method according to claim 9 **characterised in that** the compression forces are additionally applied by an internal region (28) of the compression sleeve (22), which is near the end of the compression sleeve (22), that is towards the pipe.

## Revendications

1. Raccord de compression pour tuyau, dans lequel à l'état comprimé, au moins une zone d'extrémité (10) d'un tuyau est reliée au moyen d'un manchon de compression (22) exerçant des forces de compression radiales, enfoncé axialement à l'extérieur sur le tuyau ainsi que d'un manchon déformable (18) à une douille de soutien (12) insérée dans l'extrémité de tuyau, pour établir la compression, l'extrémité de tuyau (10) étant enfoncée sur la douille de soutien (12), sur laquelle le manchon déformable est disposé et le manchon de compression (22) est enfoncé axialement sur le manchon déformable dans la zone de la douille de soutien, **caractérisé en ce que** le manchon de compression (22) présente côté intérieur dans la zone qui est enfoncée lors de l'enfoncement du manchon de compression en premier sur la zone de la douille de soutien, au moins un bourrelet de compression entourant radialement ou au moins une zone dotée d'une section (24 ; 26) rétrécie qui est réalisée de telle sorte que de par celle-ci soient appliquées des forces de compression supérieures à celles d'au moins une section interne (32) axiale se trouvant axialement dans le sens d'enfoncement derrière le bourrelet de compression ou la zone dotée de la section rétrécie du manchon de compression (22).

2. Raccord de compression pour tuyau selon la revendication 1, **caractérisé en ce que** le manchon déformable (18) est réalisé de manière profilée.

3. Raccord de compression pour tuyau selon la revendication 1 ou 2, **caractérisé en ce que** le au moins un bourrelet de compression ou la zone dotée de la section rétrécie (24 ; 26) présente une forme de section essentiellement ronde.

4. Raccord de compression pour tuyau selon l'une quelconque des revendications 1 à 3, **caractérisé en ce que** le manchon de compression (22) présente une forme de base essentiellement en forme de cylindre creux ou légèrement conique, un premier bourrelet de compression (24) arrondi doté d'un premier diamètre minimal étant prévu directement sur le côté frontal qui est enfoncé sur la zone de la douille de soutien et un second bourrelet de compression (26) arrondi doté d'un second diamètre minimal étant prévu axialement derrière dans le sens d'enfoncement, lequel diamètre est inférieur au premier diamètre minimal.

5. Raccord de compression pour tuyau selon l'une quelconque des revendications 1 à 4, **caractérisé en ce que** le manchon de compression (22) présente dans sa zone d'extrémité avant dirigée vers son extrémité de tuyau (10), une zone (28) dotée d'un rétrécissement de section essentiellement conique.

6. Raccord de compression pour tuyau selon la revendication 5, **caractérisé en ce que** le manchon déformable (18) présente un profilage (20a; 20b) côté extérieur qui correspond à un profilage correspondant de la douille de soutien (12).

7. Raccord de compression pour tuyau selon la revendication 6, **caractérisé en ce que** le profilage (20a ; 20b) côté extérieur du manchon déformable est réalisé de manière arrondie.

8. Manchon de compression (22) pour une utilisation dans un raccord de compression pour tuyau selon l'une quelconque des revendications précédentes, **caractérisé en ce que** le manchon de compression (22) présente côté intérieur dans la zone qui est enfoncée lors de l'enfoncement du manchon de compression en premier sur la zone de la douille de soutien (12) du raccord de compression pour tuyau, au moins un bourrelet de compression entourant radialement ou au moins une zone dotée d'une section (24 ; 26) rétrécie qui est réalisée de telle sorte que de par celle-ci soient appliquées des forces de compression supérieures à celles d'au moins une section interne (32) axiale se trouvant axialement dans le sens d'enfoncement derrière le bourrelet de compression ou la zone dotée de la section rétrécie du manchon de compression (22).

9. Procédé d'établissement d'une compression d'une extrémité de tuyau (10) avec un raccord de compression pour tuyau selon l'une quelconque des revendications précédentes 1 à 7, **caractérisé en ce que** les forces de compression radiales sont appliquées par le manchon de compression (22) renforcées par une zone interne (24 ; 26) du manchon de compression, qui se trouve près de l'extrémité avant du manchon de compression (22) dirigée vers le raccord (14).

10. Procédé selon la revendication 9, **caractérisé en ce que** les forces de compression sont appliquées en outre par une zone interne (28) du manchon de compression (22) qui se trouve près de l'extrémité avant du manchon de compression (22) dirigée vers le tuyau.
